# EUROPEAN PATENT APPLICATION

(11) **EP 3 654 221 A1**
(43) Date of publication of application: **20.05.2020**
(21) Application number: 19275123.8
(22) Date of filing: 14.11.2019
(51) Int. Cl.: G06F 21/62, G06F 3/06, G06F 21/64, H04L 29/06

(54) **DISTRIBUTED DATA STORAGE SYSTEM AND METHOD**

(30) Priority: 14.11.2018 GB 201818585
(71) Applicant: Exate Technology Limited, Ickenham, Middlesex UB10 8LS (GB)
(72) Inventor: Rattan, Sonal, London, Middlesex UB10 8LS (GB); Lancos, Peter, London, Middlesex UB10 8LS (GB)
(74) Representative: Williams Powell

(57) **Abstract**

A distributed data storage system and method are disclosed. The system comprises a data router and a rules engine. The rules engine comprises a data repository encoding a plurality of data storage rules, each rule specifying an applicable attribute and a data storage outcome, the data storage outcome being selected from a set including a data processing action to be applied to data prior to storage and a designation of storage location. The data router includes an input interface, an output interface and a processor, the data router being configured to receive a data storage request, including data to be stored, via the input interface, determine from the rules engine applicable attributes corresponding to attributes of the data storage request and retrieve any associated data storage outcomes, the processor of the data router being configured, in dependence on any retrieved data storage outcomes, to divide the data into a plurality of fragments and to cause, via the output interface, storage of the data fragments whereby at least selected ones of the fragments are stored in different data stores.

## Description

### Field of the Invention

The present invention relates to a distributed data storage system and methods that are particularly applicable to controlled storage of data.

### Background to the Invention

There are many architectures for storing data. The most basic type of data storage used in desktop PCs, tablets and the like is where data is stored on a single local storage medium such as on a disk or in a nonvolatile memory. In more advanced systems used in servers and networks, data may be distributed across multiple disks or systems (such as in a redundant array of inexpensive disk (RAID) system or a storage area network (SAN).

As a general rule, the data forming a particular item (such as a file) is kept together - it might be split across different disks in a RAID volume but would typically be on the same local system.

However, this is not always the case, particularly with increased adoption of cloud based storage. In the case of cloud based systems (and virtual systems - the two having a great deal of overlap) it is not uncommon for storage to be provided as an abstracted service with the user knowing nothing more than the fact that the data is "in the cloud" and handled by a particular service provider or is accessible through the virtual infrastructure/hypervisor.

While cloud and virtual storage architectures can provide many advantages in terms of flexibility, scalability and resilience, they also introduce a layer of abstraction that is necessary to their operation and means it is very difficult to ascertain where the data actually is in terms of its physical location or how it is distributed across the storage of that service.

### Statement of Invention

According to an aspect of the present invention, there is provided a distributed data storage system comprising a data router and a rules engine,
the rules engine comprising a data repository encoding a plurality of data storage rules, each rule specifying an applicable attribute and a data storage outcome, the data storage outcome being selected from a set including a data processing action to be applied to data prior to storage and a designation of storage location;
the data router including an input interface, an output interface and a processor, the data router being configured to receive a data storage request, including data to be stored, via the input interface, determine from the rules engine applicable attributes corresponding to attributes of the data storage request and retrieve any associated data storage outcomes, the processor of the data router being configured, in dependence on any retrieved data storage outcomes, to divide the data into a plurality of fragments and to cause, via the output interface, storage of the data fragments whereby at least selected ones of the fragments are stored in different data stores.

The designation of storage location may include a designation of physical location of the data store.

The system may further comprise a data repository storing a network address and a physical location of each data store, the processor being configured to select a data store for a fragment in dependence on the storage outcome and on the data in the data repository and cause storage of the data fragment using the network address for the respective data store.

The data processing actions may include one or more actions on how to divide the data to be stored into the plurality of fragments. One of the actions may comprise fragmenting a salt password or other secret in or associated with the data to be stored whereby it is stored separately to the remaining data.

The system may further comprise a data sieve configured to process the fragmented data and to remove characters of a predetermined frequency, sequence or type prior to storage in the data store.

The attributes may include: party requesting storage of data, party owning data, party that is the subject of the data and a party requesting data.

The system may be configured to record data on the attributes and on the stored data in a data store.

The data router may be configured to receive a data retrieval request for stored data at the input interface, the processor being configured, responsive to the data retrieval request to determine from the rules engine, applicable attributes corresponding to attributes of the data retrieval request and to applicable attributes on the stored data and retrieve any associated data storage outcomes, upon the requester satisfying requirements of the data storage outcomes, the processor being configured to retrieve the data fragments from the data stores and reconstruct the data.

According to another aspect of the present invention, there is provided a method for distributed storage of data comprising:
storing, in a data repository a plurality of data storage rules, each rule specifying an applicable attribute and a data storage outcome, the data storage outcome being selected from a set including a data processing action to be applied to data prior to storage and a designation of storage location;
receiving a data storage request, including data to be stored;
determining from data storage rules applicable attributes corresponding to attributes of the data storage request;
retrieving any data storage outcomes associated with applicable data storage rules; and,
in dependence on the data storage outcomes, dividing the data into a plurality of fragments and causing storage of the data fragments whereby at least selected ones of the fragments are stored in different data stores.

The designation of storage location preferably includes a designation of physical location of the data store, the method further comprising storing a network address and a physical location of each data store, selecting a data store for a fragment in dependence on the storage outcome and on the stored physical locations and causing storage of the data fragment using the network address for the respective data store.

The data processing actions may include one or more actions to fragment a salt password, or other secret in or associated with the data to be stored, whereby it is stored separately to the remaining data.

The method may further comprise sieving the fragmented data to remove characters of a predetermined frequency, sequence or type prior to storage in the data store.

The method may further comprise recording data on the attributes and on the stored data in a data store.

The method may further comprise:
receiving a data retrieval request for stored data;
determining from the data repository applicable attributes corresponding to attributes of the data retrieval request and to applicable attributes on the stored data;
retrieving any associated data storage outcomes;
determining if the requester satisfies requirements of the data storage outcomes;
if the requester satisfies the requirements, retrieving the data fragments from the data stores and reconstructing the data.

According to another aspect of the present invention, there is provided a data router for controlling distributed data storage.

In embodiments of the present invention, the data router enforces data policies by controlling access to data and storage of data at the most granular level.

There are many factors that need to be considered when allowing data to be processed. Embodiments of the present invention enable this to be handled at an automated level and avoid reliance on staff following policies. Furthermore, embodiments of the present invention enable cloud and virtual storage architectures to be used and for their associated benefits such as resilience, flexibility and scalability to be obtained whilst at the same time ensuring in an automated fashion that controls on data such as location of storage are applied.

In some jurisdictions, restrictions may be placed on where (physically) data may be stored. Additionally, under certain regimes, encryption by itself is not considered sufficient to protect data in the case of cross-border transfers.

Embodiments of the present invention enable distributed storage of data while complying with such regimes. In embodiments of the present invention, data is encrypted and then pseudonymised. The data router deconstructs encryption and salt passwords and distributes these as data fragments in a permitted country/system. The remainder of the data is fragmented and stored as normal, the fragments' location being controlled by the respective storage architecture. The distribution of data fragments is determined in dependence on predetermined rules. Preferably, each data subject has its own rules (as discussed in the examples below), although other rule granularity or grouping is possible such as being based on file type, subject of the data, a classification of the data file, its content, subject or origin/author etc.

The rules are also applied during retrieval of the data - the data item is requested from the data router which cross-checks the rules to determine where the respective fragments were stored, retrieves the fragments and then reconstructs the data item (or passes it to a decryption system to reconstruct it). Data access can be enforced by the data router verifying the requester of data has access rights before retrieval of the data. Optionally, instead of relying on rules to determine the location for retrieval of data, this location information could be recorded in some secure repository at the time of storing the data and this information used for subsequent retrieval by the data router.

By pseudonymising the encrypted text and ensuring the fragments to reconstruct the data are held separate from the source system, data access can be controlled such that it can be reconstructed only after the requester is subjected to a rule check to see if data is permitted to be reconstructed. Should the rule check be passed, the fragments of the key and encrypted text can be released (and preferably reconstructed) for the requester.

Embodiments of the present invention use a rule-driven approach for pseudonymisation and de-pseudonymisation of data. The system and data router allow the reuse of keys for a datasubject + attribute type to allow the reconstruction of the encryption and defragmentation of data to allow for search and verification of existing data.

With the restriction of the rights of data subjects and the inherent nature of blockchain with immutable storage of data, the system and data router have been created to allow pseudonymised data to be verified and searched on where the accessing party has the rights to do so. This is achieved by the above mechanism of encryption of the value and the same algorithm used to defragment the encrypted string to achieve the same output. This allows the data to be searchable if reconstructed in the same way. If any part of the key or data subject's data is destroyed the value cannot be recreated.

In preferred embodiments, the data router applies multiple rules to determine how to route data (which fragments to route where). These may include Cross Border (whether the data may be stored across borders and if so, conditions for doing so), internal rules (those set by the data owner, data subject, user or system) and the rights of the data subject. All three levels of rules are applied to determine where to route data when it is stored and these must also be satisfied in order for the data router to allow retrieval and reconstruction of the data.

In preferred embodiments, at least selected ones of the rules correspond to legal rights of a data subject such as those set out by the GDPR.

In one embodiment, based upon either the nationality or the location of the data subject, the data router may automatically route both the keys and the data fragments to different locations.

In preferred embodiments, pseudonymised ciphertext can be stored on a public blockchain or other similar public leger systems. Using the data storage system, this pseudonymised data can be validated without exposing the identity of the data subject. It should be noted that one way hashed data is not pseudonymised). Additionally, in embodiments the pseudonymised data can be recreated for searching (process is similar to 2-factor authentication and is discussed below).

It will be appreciated that embodiments of the present invention are not limited to a particular data storage architecture type and in fact is able to transparently handle storage in multiple local and remote data storage systems in accordance with the various predetermined rules. Distribution of data fragments to specific local or remote data storage systems is also automatically and transparently controlled. While the data router operates transparently to the user, it nevertheless automatically ensures that the correct destination is used (physical location, particular server/data storage provider etc).

Embodiments of the present invention enable storage of Personally Identifiable Information on a blockchain of other distributed ledger that provides advantages for immutability reasons. Advantageously, embodiments simultaneously comply with data privacy regulations. As an example, suppose you had a sensitive attribute that you wished to store on the blockchain. That attribute is fragmented, and one fragment stored on the blockchain (with others elsewhere determined by a designated rule/algorithm by the data router as discussed below). When a firm who has the clear text version of the attribute wants to validate that the attribute has not been tampered with, they can defragment the attribute (using the same algorithm) and can verify that the fragment on the blockchain is the same as the defragmented version of the clear text attribute.

Example: A Self Sovereign Identity blockchain has stored the passport number of an individual. As blockchain cannot store the PII (due to Right to be Forgotten under GDPR), a fragmented component of the data is stored on the blockchain. When a bank wants to confirm the passport number of the individual, they fragment the attribute using the algorithm, and then search for the fragmented attribute on the blockchain. If the two fragments match, then the data attribute is validated.

### Brief Description of the Drawings

Embodiments of the present invention will now be described, by way of example only, with reference to the accompanying drawings in which:
Figure 1 is a schematic diagram of a distributed data storage system according to an embodiment of the present invention;
Figure 2 is an illustration of an embodiment showing the data routing process with blockchain used as one of the data storage systems; and,
Figure 3 is a schematic diagram illustrating rule or policy types that may be applied.

### Detailed Description

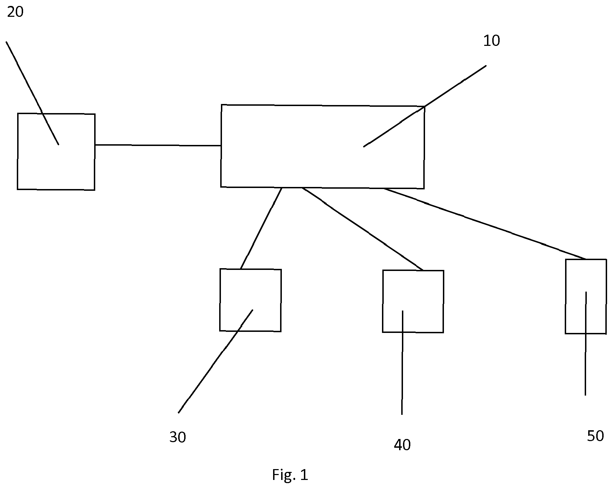

Figure 1 is a schematic diagram of a distributed data storage system according to an embodiment of the present invention.

The distributed data storage system includes a data router 10, a rules engine 20 and a plurality of data storage systems 30, 40.

The data router 10 communicates with the rules engine 20 to determine rules applicable to data storage or retrieval requests and then apply the applicable rules to data to be stored or validate the retrieval request in dependence on the applicable rules and the requester.

In the case of data storage, the data router receives data to be stored, uses them to determine how to fragment the data based on attributes such as those discussed above (data subject, content of data, data storage location, data owner, policies designed for company, country, profession etc.) and then fragments the data before storing the fragments in the designated data storage systems 30, 40.

In the case of retrieval, the rules are referenced to determine where the fragments are held and then the above process is reversed - assuming the accessing party meets any predetermined conditions designed by the rules, the fragments are retrieved, the data recompiles from the retrieved fragments, decrypted and provided to the accessing party.

Optionally, embodiments of the present invention provide the rules engine for tagging data, can generate a data dictionary and can integrate with an existing service (such as a data protection system, content classification system etc.)

To assign data ownership to a data subject, including individuals - embodiments of the present invention may use a harmonisation table which links application and Id to a master record to all rules to be assigned and revoked at the data subject master level.

| HarmonisationID | Common name | Domicile | Nationaity |
|---|---|---|---|
| 1 | s@exat.com | GB | GB |
| 2 | p@exat.com | DE | US |

| Id | HarminisationId | Application | ApplicationId |
|---|---|---|---|
| 1 | 1 | Hubspot | 251 |
| 2 | 1 | Facebook | Sonalr |
| 3 | 1 | LinkedIn | SonalRattan |
| 4 | 2 | Hubspot | 255 |

Preferred embodiments pseudonymize ciphertext and stores part of the encrypted text alongside the keys (Salt password) in the country of restriction or an acceptable country of storage. This means that the restricted data is to be kept within the designated country it is domiciled in and the rules engine will determine what other countries the data can be viewed in.

Preferred embodiments uses two methods to secure data and associated secrets.

If the data to be encrypted is determined by the data router to have a datasubject assigned to the content (in a header, a record associated with the data or assigned in some other way), a rule check is performed to see where the secrets should be stored i.e. by the domicile of the data subject, by data type, e.g. name, address or by the context of the data creation e.g. account opening in given jurisdiction or by another mechanism defined.

To search on pseudonymised content, there is the ability to recreate the pseudonymised text by encrypting the data attribute you which to search for with the same key, and then to defragment the data attribute with the same algorithm. The resulting pseudonymised attribute can then be utilized as the search fragment.

If no data subject is assigned to the data a similar rule check may be performed where the entity domicile is taken into consideration and the rules may be defined by data type, e.g. trade data, tender information etc or by another mechanism defined. This data could be assigned another unique value to be able to search for the same result, similar to two factor authentication.

Using, preferably, Symmetric encryption, the password is generated of multiple parts to ensure randomisation and those parts are distributed and reconstructed when all conditions are met.
Types of Parameters used for generating the secret
1) Guid that defines the firm data belongs to (which can be shared for multi firm sharing and validation)
2) Random generated text or guid as a secret
3) Random generated text or guid as an authentication code
4) Any other parameters that are required to reconstruct the secret - hash to check
5) Algorithm to reconstruct (i.e. use alternative characters)

The data router's proprietary algorithm then preferably constructs this into a given secret to create the key to encrypt data.

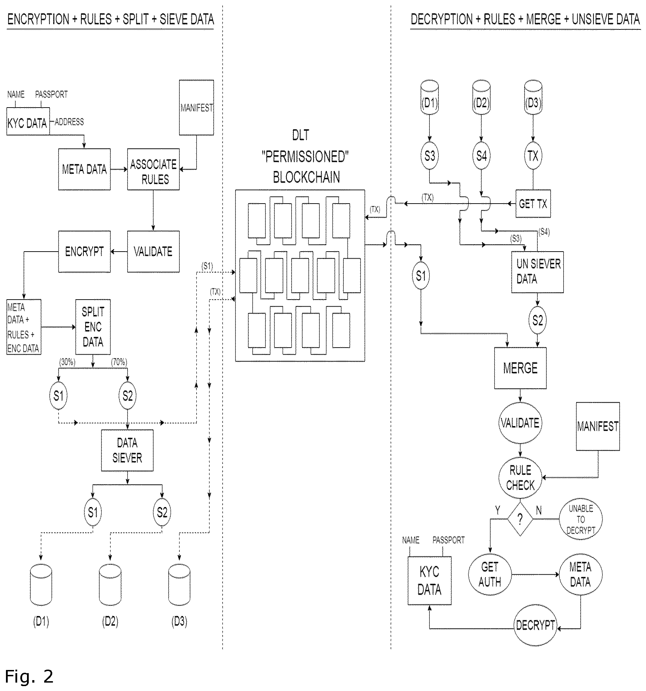

Figure 2 is an illustration of an embodiment showing the data routing process with blockchain used as one of the data storage systems.

Note that in this example, datastores designated D1, D2 and D3 are the same on both sides of the diagram -they are illustrated twice to show access by both parties.

In an example, encrypted data could be represented as AAAAAAABBBBBBB (which as appreciated would generally be a far simplified representation). The data router may transform this into three fragments AB1AB1AB1AB1 AB2AB2AB2 AB3AB3AB3AB3. The AB2 fragments may be stored in the country accountable for data (country store AB2), the AB3 fragments may be stored in a metadata repository (AB3) and in the source system. In a preferred embodiment, a data fragment may be held in a public ledger such as the Blockchain. This fragment (AB1) also preferably includes a data reconstruction ID which tells the system how to reconstruct the encrypted data. Preferably it is one way hashed before being stored in the Blockchain. In order to check validity the of the data, the data router (or some other system) reencrypts the data being tested which it then deconstructs to create AB1 and then is hashed to add onto Blockchain).

The combination of AB1+AB2+AB3 will constitute the complete data attribute when reconstructed in the correct order. As an example, the attribute FIRSTNAME may be encrypted into a string called AAAAAAABBBBBBB. This string may be dynamically fragmented into three self contained sub-fragments that are no longer usable in their current state. Instead, they must be re-assembled using the data router and its algorithms to reconstruct the attribute called AAAAAAABBBBBBB.

AAAAAAABBBBBBB is an encrypted string which can be mathematically broken with sufficient computational power. Under guidance of the data router, the fragments however, are random and cannot be broken through computational power and AB1 AB2 AB3 are all turned into pseudonymised random data fragments.

Blockchain is preferably used as a store for the immutability of one of the data fragments alongside the reconstruction data Ids. Continuing the example above:

### Data (multi factor feature recognition)

Embodiments also allow for pseudonymised features to be included with data
AAAAAAABBBBBBB(encryption) CCCCCDDDD (Features)

Splitting the features in exactly the same way as the encryption enables a probabilistic view on whether data is the same (i.e the name "Sonal" that is encrypted and fragmented as a multi-factor feature created by firm 1 and the encrypted and fragmented "sonal" created by firm 2 is 99% the same). The feature is reconstructed with data held off chain to be seen as a feature. This will only be granted and reconstructed if the rule check has passed and the CD2 and CD3 are available for the reconstruction. This needs to be done per transaction for the data or features are being processed.

### Keys

Key storage may be performed in a similar way to data above. For symmetric encryption (e.g. AES), a passcode (which is multiple random guids hashed) is used. One is always in memory for the firm or held on in a repository for sharing with a 3rd party. Second is held with metadata and third is stored in the country and part is kept with metadata (one central repository) and country store.
YYYYYYZZZZ (passcode) -> YZ1YZ1YZ1 YZ2YZ2YZ2YZ2 YZ3YZ3YZ3

Components in the design:
Data Splitter: This component is designed to spilt a given string into 2 parts with given proportion size.
Ex: If the string is "This is the string that will be split", the split algorithm calculates all white space, then accepts a optional parameter and splits the string by default into 30-70

SplitString(Original String, propotion1,propotion2)

```
 {
 Returns 2 values
   1. String 1 with proportion 1 or default 30 %
 } 2. String 2 with proposition 2 or default 70%
```

### Data Merge

Merge String (String1,String2)

```
 {
      Unites (String1 and String2) - calculates the split percentage
 } Return the Original String
```

Data Sieve or Data Filter: This is an optional but preferred component that selectively filters the string for random characters or acts like a Sieve.

The setting on what characters, how many, frequency and sequence are configurable and will could potentially vary from each user and firm Data Sieve helps in reducing the final size of the data/string that needs to be stored and add another layer of complexity for data breaches

Data Un Sieve or Data Filler: This component does exactly opposite of Data Sieve. This component puts back the characters which were extracted out by Sieve back in their exact position and bring the string/data back to its full form.

The sequence, format, frequency on data filler is configurable and can vary from each user and firm

The Un Sieved string could then be processed further

Blockchain as DLT and Storage mechanism
- Using Industry standard Blockchain or other ledger such as Ethereum or Hyperlegder
- Holds part of the data for each attribute. (the smaller proportion of each attribute- Ex: 30 %)
- DLT would be a Permissioned Blockchain with selected participating Nodes.
- Each Node can participate in Data reconciliation and verification process
- The solution has an off chain component will hold major part of the data attribute (70%)
- Off Chain component can be distributed in any particular country
- DLT - Serves as distributed data amongst permissioned participations, and blockchain structure servers as immutable records for each transactions

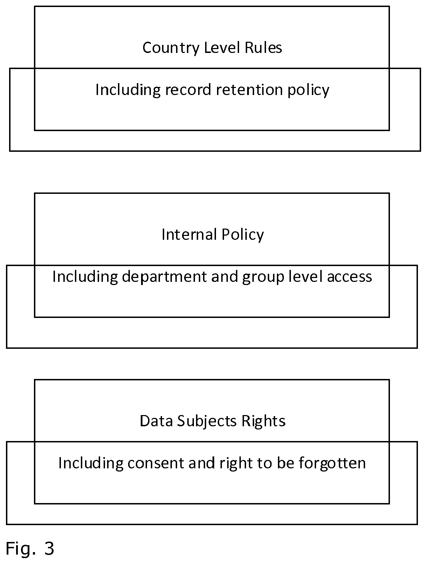

Rules Engine: The rules engine is preferably built on a 3 layered approach as shown in Figure 3.

Examples of the same attribute with different rules
- Customer A exercises his/her right to be forgotten under GDPR, yet record retention rules requires the firm to retain certain information. The keys and part of the pseudonymized strands of Customer A's data are removed from the key management solution and stored in a "locked down vault". Customer A's data can no longer be processed. If there is a legal or regulatory need to see Customer A's data, the keys and the pseudonymized data strands can be returned and reconstructed, reinstating Customer A's data, in a fully audited and controlled manner. Alternatively, should the record retention period expire, the data in the vault will be automatically purged, in accordance with local regulations.
- Customer A and Customer B are both in the same country. Customer A has consented to marketing and access to his information will granted and he will receive notifications. Customer B has not consented so therefore access to his data will not be granted.
- Customer A is in a country that has cross border data restrictions. If he has consented, a person within this country may access his data. However, if a person outside the country attempts to access the same data, it will be blocked.
- Internally within a firm Customer A may have his data accessed by a relevant person (i.e. Relationship Manager/Sales), as it as part of their normal business activity. If an employee with a role who should not access this data (Finance) attempts to access it, it will be blocked

Country Level Rules: The system has been designed to allow to input/modify all country level rules once (by data governance teams or potentially by 3^{rd} party legal counsel)

Data is routed from one location to another if the rules permit the data to be processed in the country requesting the type data, the internal policy of what countries are allowed to view certain data types and finally the rights of a data subject (if defined) has consented for their data to be accessed across different jurisdictions.

Data Subject Controls: the system automatically takes into account the rights of a data subject, be it an individual, fund, portfolio level to apply consent type rules against different types of data usage including the sharing of data over multi jurisdictions, sharing data with 3^{rd} party and/or for AI type profiling. The rules engine is designed to route keys and data fragments to the different locations depending on how the rules have been defined against the data subject, data origination point or entity location.

Embodiments of the present invention may use:
Multi-Vector Feature Processing and Extraction - reading the features for pseudonymised data, describing the underlying data to use for Homomorphic feature recognition.

Probability based Homomorphic feature recognition - comparison of Multi-Vector features on pseudonymized data (non-reversible) to be able to compare values and, on a probability basis, be able to determine if the underlying value is the same.

Zero knowledge distributed fragment processing - Ability to reconstruct data with a 3rd party holding partial data and secrets

AI based entity recognition, reconstruction, and processing - a reader bot looks through text and works out if something is pseudonymised and reconstructs it (if it passes the rule check).

### Rule-based dynamic data protection

Self-identifiable rule-based searching - reconstructing fragmented data to pseudonymised data with multi-factors (such as knowing the attribute type, the data subject common name and reuse keys, secrets and pseudonymisation technique to recreate value).

To pseudonymise the protected data, we remove the ability to recreate and reconstruct the ciphertext by deleting the salts and the remaining fragments.

It will be appreciated that the data storage systems themselves may take various forms including central or distributed file stores and databases (such as SQL or other relational or non-relational database types). They may be implemented using storage devices such as hard disks, random access memories, solid state disks or any other forms of storage media. They could also be cloud-based services, public ledger based systems or the like. It will also be appreciated that the processor discussed herein may represent a single processor or a collection of processors acting in a synchronised, semi-synchronised or asynchronous manner.

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention which is defined by the recitations in the claims below and equivalents thereof.

## Claims

1. A distributed data storage system comprising a data router and a rules engine,
the rules engine comprising a data repository encoding a plurality of data storage rules, each rule specifying an applicable attribute and a data storage outcome, the data storage outcome being selected from a set including a data processing action to be applied to data prior to storage and a designation of storage location;
the data router including an input interface, an output interface and a processor, the data router being configured to receive a data storage request, including data to be stored, via the input interface, determine from the rules engine applicable attributes corresponding to attributes of the data storage request and retrieve any associated data storage outcomes, the processor of the data router being configured, in dependence on any retrieved data storage outcomes, to divide the data into a plurality of fragments and to cause, via the output interface, storage of the data fragments whereby at least selected ones of the fragments are stored in different data stores.

2. The distributed data storage system of claim 1, wherein the designation of storage location includes a designation of physical location of the data store.

3. The distributed data storage system of claim 1 or 2, further comprising a data repository storing a network address and a physical location of each data store, the processor being configured to select a data store for a fragment in dependence on the storage outcome and on the data in the data repository and cause storage of the data fragment using the network address for the respective data store.

4. The distributed data storage system of any preceding claim, wherein the data processing actions include one or more actions on how to divide the data to be stored into the plurality of fragments.

5. The distributed data storage system of claim 4, wherein one of the actions comprises fragmenting a salt password or other secret in or associated with the data to be stored whereby it is stored separately to the remaining data.

6. The distributed data storage system of any preceding claim, further comprising a data sieve configured to process the fragmented data and to remove characters of a predetermined frequency, sequence or type prior to storage in the data store.

7. The distributed data storage system of any preceding claim, wherein the attributes include: party requesting storage of data, party owning data, party that is the subject of the data and a party requesting data.

8. The distributed data storage system of claim 7, wherein the system is configured to record data on the attributes and on the stored data in a data store.

9. The distributed data storage system of claim 8, wherein the data router is configured to receive a data retrieval request for stored data at the input interface, the processor being configured, responsive to the data retrieval request to determine from the rules engine, applicable attributes corresponding to attributes of the data retrieval request and to applicable attributes on the stored data and retrieve any associated data storage outcomes, upon the requester satisfying requirements of the data storage outcomes, the processor being configured to retrieve the data fragments from the data stores and reconstruct the data.

10. A method for distributed storage of data comprising:
storing, in a data repository a plurality of data storage rules, each rule specifying an applicable attribute and a data storage outcome, the data storage outcome being selected from a set including a data processing action to be applied to data prior to storage and a designation of storage location;
receiving a data storage request, including data to be stored;
determining from data storage rules applicable attributes corresponding to attributes of the data storage request;
retrieving any data storage outcomes associated with applicable data storage rules; and,
in dependence on the data storage outcomes, dividing the data into a plurality of fragments and causing storage of the data fragments whereby at least selected ones of the fragments are stored in different data stores.

11. The method of claim 10, wherein the designation of storage location includes a designation of physical location of the data store, the method further comprising storing a network address and a physical location of each data store, selecting a data store for a fragment in dependence on the storage outcome and on the stored physical locations and causing storage of the data fragment using the network address for the respective data store.

12. The method of claim 10 or 11, wherein the data processing actions include one or more actions to fragment a salt password, or other secret in or associated with the data to be stored, whereby it is stored separately to the remaining data.

13. The method of any of claims 10 to 12, further comprising sieving the fragmented data to remove characters of a predetermined frequency, sequence or type prior to storage in the data store.

14. The method of any of claims 10-13, further comprising recording data on the attributes and on the stored data in a data store.

15. The method of any of claims 10-14further comprising:
receiving a data retrieval request for stored data;
determining from the data repository applicable attributes corresponding to attributes of the data retrieval request and to applicable attributes on the stored data;
retrieving any associated data storage outcomes;
determining if the requester satisfies requirements of the data storage outcomes;
if the requester satisfies the requirements, retrieving the data fragments from the data stores and reconstructing the data.
